# EUROPÄISCHE PATENTSCHRIFT

(11) **EP 0 911 206 B1**
(45) Veröffentlichungstag und Bekanntmachung des Hinweises auf die Patenterteilung: **14.08.2002**
(21) Anmeldenummer: 98117304.0
(22) Anmeldetag: 12.09.1998
(51) Int. Cl.: B60K 41/06, F16H 61/02

(54) **Verfahren zum Schalten eines Automatikgetriebes in einem Fahrzeug**
Method for gear shifting in a vehicle automatic transmission
Méthode de changement de vitesses dans une véhicule avec boite à transmission automatisée

(30) Priorität: 25.10.1997 DE 19747270
(43) Veröffentlichungstag der Anmeldung: 28.04.1999
(73) Patentinhaber: Bayerische Motoren Werke Aktiengesellschaft, 80788 München (DE)
(72) Erfinder: Bock, Christian, 81925 München (DE)

(56) Entgegenhaltungen:
- EP-A- 0 344 772
- WO-A-88/06234
- DE-A- 19 644 477
- US-A- 5 125 292
- US-A- 5 478 293

## Beschreibung

Die Erfindung betrifft ein Kraftfahrzeug mit einem Automatikgetriebe und ein Verfahren zum Schalten dieses Automatikgetriebes gemäß dem Oberbegriff der Ansprüche 1 und 6. Ein Automatikgetriebe und ein Verfahren zum Schalten dieses Automatikgetriebes nach dem Oberbegriff der Ansprüche 1 und 6 ist aus der US 5,478,293 bekannt.

Automatikgetriebe im Rahmen der Erfindung sind sowohl vollautomatische Getriebe, bei welchen Gänge in Abhängigkeit von der Fahrzeug-Geschwindigkeit automatisch geschaltet werden, als auch teilautomatische Getriebe, bei welchen ein Fahrer die Getriebegänge manuell wählen kann und dann der gewählte Gang automatisch geschaltet wird, sowie Getriebe, welche beide Möglichkeiten beinhalten.

Bei den meisten Kraftfahrzeugen bleiben die Motoren und Getriebe in allen Betriebssituationen gleich eingestellt, insbesondere der Zündwinkel bei Ottomotoren und der System-Flüssigkeitsdruck zur Betätigung von Schaltkupplungen und Schaltbremsen im Automatikgetriebe. Der Motor reagiert nur auf Änderungen der Stellung des Gaspedals. Anstatt "Gaspedal" wird im folgenden der Ausdruck "Fahrelement" verwendet für alle Arten von fußbetätigbaren oder manuell betätigbaren Brennstoffeinstellelementen von Ottomotoren und von Dieselmotoren.

In der Praxis ist es zumindest bei Fahrzeugen der gehobenen Klasse bekannt, während eines Gangwechselvorganges des Automatikgetriebes beim Ottomotor den Zündwinkel zu verändern oder beim Dieselmotor die Dieselöleinspritzung zu drosseln oder den Systemdruck der Flüssigkeit, welche Schaltkupplungen und/oder Schaltbremsen betätigt, abzusenken, damit die Gänge "weich" geschaltet werden, insbesondere wenn das Kraftfahrzeug mit einer auf einen niedrigen Wert am Fahrelement eingestellten Motorleistung rollt, z.B. bergab, oder beim "langsamen" Beschleunigen.

Die Erfindung betrifft Automatikgetriebe, bei welchen bei einem Gangwechsel die Kombination der Zahnräder geändert wird, welche miteinander in Eingriff sind. Hierfür enthält das Automatikgetriebe Schaltkupplungen und meistens auch Schaltbremsen. Zur Vereinfachung der Beschreibung wird nur der Begriff "Schaltkupplungen" verwendet, stellvertretend auch für Schaltbremsen.

Grundsätzlich besteht bei allen bekannten Kraftfahrzeugen ein "kritischer Schaltzustand" immer dann, wenn eine oder mehrere Schaltkupplungen des Automatikgetriebes nicht mit dem vollen Flüssigkeits-Systemdruck in ihre Schließstellung gedrängt werden. Ein solcher kritischer Schaltzustand liegt vor:
a) Wenn eine zugeschaltete (abgebende) Schaltkupplung des bisherigen Ganges und eine zugeschaltete (übernehmende) Schaltkupplung des neuen Ganges beide im Reibbetrieb mit Schlupf arbeiten, d.h. wenn beide Schaltkupplungen in der Übergabephase sind. In dieser Übergabephase kann der Motor unerwünscht hoch drehen oder überdrehen, wenn der der Fahrer am Fahrelement plötzlich eine wesentlich höhere Motorleistung einstellt.
b) Wenn die zugeschaltete Schaltkupplung kurz vor Synchronlauf mit ihrem Getriebeteil (Zahnrad oder ein Planetenträger eines Planetengetriebes) ist, und die abgeschaltete Schaltkupplung bereits vollständig geöffnet ist; oder wenn die zugeschaltete Schaltkupplung Synchronlauf mit ihrem Getriebeteil erreicht hat, jedoch ihr Kupplungs-Schließdruck noch nicht auf den vollen Systemdruck angestiegen ist. Während diesen beiden Schaltphasen sind Drehmomentstöße, beispielsweise durch eine vom Fahrer am Fahrelement plötzlich eingestellte wesentlich höhere Motorleistung, unerwünscht, da sie die zugeschaltete Schaltkupplung zu einem stärkeren Rutschen oder erneut zum Rutschen bringen können, bevor sie dann mit dem Erreichen des vollen Systemdruckes ihrer Kupplungs-Flüssigkeit vollständig geschlossen wird.
c) Wenn der Flüssigkeitsdruck der abgeschalteten Schaltkupplung unter den vollen Systemdruck abgesenkt wurde durch einen eingeleiteten Schaltvorgang und die abgeschaltete Schaltkupplung gerade noch vollständig geschlossen hält oder noch im Reib-Schlupfbetrieb hält.

Dies bedeutet, daß der "kritische Schaltzustand" beginnt, sobald der Flüssigkeits-Schließdruck einer abgeschalteten Schaltkupplung unter den vollen Systemdruck absinkt, wobei der kritische Schaltzustand dann der in der Übergabephase anhält, und dann noch so lange dauert, bis die zugeschaltete Schaltkupplung eines neu gewählten Ganges von ihrer Betätigungsflüssigkeit so stark in Schließstellung gedrängt wird, daß sie bei der vom Fahrer am Fahrelement eingestellten Motorleistung nicht mehr rutschen kann.

Das Fahrelement kann mechanisch durch ein Gestänge oder einen Seilzug mit der Brennstoffzufuhreinrichtung des Motors, z.B. einem Vergaser oder einer Einspritzvorrichtung, verbunden sein, oder elektronisch gekoppelt sein. Die heute bekannten elektronischen Brennstoff-Einstellsysteme in Kraftfahrzeugen verhalten sich wie die konventionellen mechanischen Brennstoff-Einstellsysteme. Hierbei führt eine vom Fahrer des Kraftfahrzeuges gewünschte Leistungsänderung, und damit Drehmomentänderung, des Motors bei Betätigung des Fahrelements unmittelbar zu einer entsprechenden Erhöhung oder Reduzierung der Motorleistung bzw. seines Drehmoments. Wenn vom Fahrer plötzlich eine starke Leistungsänderung gewünscht und am Fahrelement eingestellt wird, während gerade im Automatikgetriebe ein Schaltungsvorgang abläuft, dann kann der starke Anstieg des Motor-Drehmoments zu einem schlechten Schaltkomfort führen. Besonders kritisch sind z.B. automatische Gangschaltungen während des Ausrollens des Fahrzeuges oder das Schalten von Gängen, während der Motor mit wenig Gas oder Standgas läuft, und dabei die Schaltkupplungen zur Optimierung des Schaltkomforts mit sehr kleinen Kupplungsdrücken betätigt werden. Wenn während eines solchen Zustandes vom Fahrer am Fahrelement das Drehmoment des Motors plötzlich stark erhöht wird, sodaß am Motor ein schneller Drehmomentanstieg entsteht, dann kann die Flüssigkeits-Drucksteuerung, welche den Druck der Betätigungsflüssigkeit der Schaltkupplungen des Getriebes steuert, unter Umständen dem schnellen Drehmomentanstieg des Motors nicht schnell genug folgen, so daß ein starker Schlupf in den Schaltkupplungen entsteht und der Motor hochdreht, bevor dann die Betätigungsflüssigkeit der Schaltkupplungen den vollen Systemdruck erreicht und die Schaltkupplungen wieder schließt. Hierbei entsteht ein starker Schaltstoß.

Durch die Erfindung soll die Aufgabe gelöst werden, bei Kraftfahrzeugen mit einem teilautomatischen oder vollautomatischen Automatikgetriebe und einem elektronischen Brennstoff-Einstellsystem den Schaltkomfort während kritischen Schaltphasen des Automatikgetriebes deutlich zu verbessern.

Diese Aufgabe wird gemäß der Erfindung durch die Merkmale der Ansprüche 1 und 6 gelöst.

Weitere Merkmale der Erfindung sind in den Unteransprüchen enthalten.

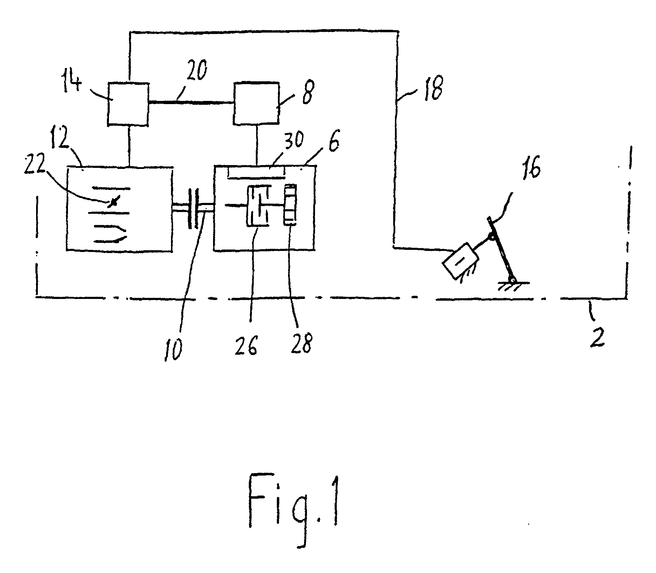

Die Erfindung wird im folgenden mit Bezug auf die beiliegende Zeichnung anhand einer bevorzugten Ausführungsform als Beispiel beschrieben. In der Zeichnung zeigt
- Fig. 1: schematisch einen Teil eines Kraftfahrzeuges mit einer Motor- und Getriebesteuerung gemäß der Erfindung.

Fig. 1 zeigt schematisch einen Teil eines Kraftfahrzeug-Fahrgestells 2; je darauf einen Verbrennungsmotor 12 (Ottomotor oder Dieselmotor) mit einer elektronischen Motorsteuereinrichtung 14; ein mit dem Motor 12 über eine Antriebsverbindung 10 antriebsmäßig verbundenes vollautomatisches oder teilautomatisches Automatikgetriebe 6 mit einer elektronischen Getriebesteuereinrichtung 8 zur automatischen Schaltung von Gängen des Automatikgetriebes; und ein von einem Fahrer in Abhängigkeit von der gewünschten Motorleistung bzw. dem gewünschten Motordrehmoment einstellbaren Fahrelement 16, welches über eine elektrische Leitung 18 oder drahtlos mit der Motorsteuereinrichtung 14 gekoppelt ist, so daß vom Fahrer am Fahrelement 16 vorgenommene Einstellungen und Einstellungsänderungen der Motorsteuereinrichtung 14 mitgeteilt werden. In Fig. 1 ist das Fahrelement 16 als Gaspedal (für einen Ottomotor oder als Fahrpedal zur Einstellung der Dieselölzufuhr zu einem Dieselmotor) dargestellt. In abgewandelter Ausführungsform kann es auch ein manuell betätigbares Element sein.

Die elektronische Getriebesteuereinrichtung 8 teilt über einen seriellen Datenbus 20 der Motorsteuereinrichtung 40 mit, wenn das Automatikgetriebe 6 sich gerade in einer kritischen Phase eines Gangwechsels befindet. Wie eingangs beschrieben wurde, kann die kritische Phase ein Teilzeitraum oder der gesamte Zeitraum des eingangs beschriebenen "kritischen Schaltzustandes" sein. Wird durch den Fahrer in solch einer kritischen Phase eine Leistungserhöhung und damit auch eine Drehmomenterhöhung am Fahrelement 16 eingestellt, dann wird dieser Wunsch des Fahrers durch die Motorsteuereinrichtung 14 verzögert erst dann ausgeführt, wenn sich das Automatikgetriebe 6 wieder in einer stabileren Schaltphase befindet.

Das Automatikgetriebe 6 kann ein vollautomatisches Getriebe sein, dessen Gänge in Abhängigkeit von der Fahrzeuggeschwindigkeit automatisch geschaltet werden, oder ein teilautomatisches Getriebe sein, bei welchem der Fahrer an einer Wählvorrichtung einen gewünschten Gang wählt, der dann von der Getriebesteuereinrichtung 8 automatisch geschaltet wird. Auch sind Getriebeausführungen möglich, die beide Möglichkeiten beinhalten. Das Automatikgetriebe 6 enthält nicht-dargestellte Schaltkupplungen und gegebenenfalls auch Schaltbremsen, welche im Automatikgetriebe 6 enthaltene Zahnräder, welche nicht dargestellt sind, je nach gewähltem Gang miteinander kombinieren.

Damit für den Fahrer nicht der Eindruck entsteht, daß der Motor 12 zu träge reagiert, darf die vorstehend beschriebene Verzögerung der Erhöhung des Drehmoments, nach dem ein solches erhöhtes Drehmoment am Fahrelement 16 eingestellt wurde, nur für kurze Zeiträume zulässig sein, z.B. in der Gößenordnung von 100 bis 400 ms, vorzugsweise nur zwischen 200 bis 300 ms.

Gemäß einer abgewandelten Ausführungsform der Erfindung wird der Motor 12 nicht verzögert auf das vom Fahrer am Fahrelement 16 geforderte Drehmoment eingestellt, sondern unverzögert, jedoch mit einem reduzierten oder begrenzten Gradienten der Drehmomentzunahme des Motors, d.h. mit anderen Worten, die Steigerung oder die Geschwindigkeit der Drehmomentzunahme des Motors wird reduziert oder auf einen vorbestimmten Wert begrenzt durch entsprechende Maßnahmen in der Motorsteuereinrichtung 14.

Gemäß einer nochmals abgewandelten Ausführungsform der Erfindung können beide Möglichkeiten miteinander kombiniert werden, nämlich die oben beschriebene Verzögerung und die oben beschriebene Reduzierung oder Begrenzung des Gradienten der Drehmomentzunahme. In diesem Falle kann die Verzögerungszeit verkürzt werden.

Bei allen Ausführungsformen erfolgt die Verzögerung und die Reduzierung oder Begrenzung des Gradienten der Drehmomentzunahme des Motors 12 automatisch durch elektronische Maßnahmen in der Motorsteuereinrichtung 14 in Abhängigkeit von den von der Getriebesteuereinrichtung 8 gemeldeten Betriebszuständen des Automatikgetriebes 6 und in Abhängigkeit von der Einstellungsposition oder einer Änderung der Einstellungsposition des Fahrelements 16, wenn während einer kritischen Phase eines Gangwechsels des Automatikgetriebes 6 vom Fahrer am Fahrelement 16 ein schneller starker Drehmomentanstieg gefordert wird. Vorzugsweise sind die Motorsteuereinrichtung 14 und die Getriebesteuereinrichtung 8 derart ausgebildet, daß sie eine am Fahrelement 16 geforderte Drehnmomentzunahme des Motors 12 jeweils dann nicht verzögert oder nicht mit reduziertem oder begrenztem Gradienten der Drehmomentzunahme am Motor 12 einstellen, wenn am Fahrelement 16 nur eine kleine oder nur eine sehr langsam zunehmende Drehmomenterhöhung gefordert wird.

Bei einem Ottomotor, welcher eine Drosselklappe 22 zur Regulierung der Brennstoff-Luft-Zufuhr aufweist, kann die oben beschriebene Verzögerung und/oder Reduzierung oder Begrenzung des Gradienten der Drehmomentzunahme des Motors 12 durch entsprechend verzögertes oder verlangsamtes Öffnen der Drosselklappe 22 erreicht werden.

Bei einem Dieselmotor kann die oben beschriebene Verzögerung und/oder Reduzierung oder Begrenzung des Gradienten der Drehmomentzunahme des Motors 12 durch entsprechend verzögerte oder verlangsamte Erhöhung der Dieselöl-Zufuhrmenge erreicht werden, die in den Dieselmotor eingespritzt wird.

Es gibt Kraftfahrzeuge mit Automatikgetriebe, bei welchen während eines Gangwechselvorganges der Systemdruck (Normaldruck) der Flüssigkeit, welche die Schaltkupplungen des Automatikgetriebes betätigt, abgesenkt wird, damit die Gänge "weich" geschaltet werden. Außerdem ist es zum "weichen" Schalten der Gänge von Automatikgetrieben bei Fahrzeugen mit Ottomotor bekannt, den Zündwinkel des Ottomotors während eines Gangwechselvorganges entsprechend zu verändern. Die vorliegende Erfindung kann auch bei den bekannten Kraftfahrzeugen verwendet werden, bei welchen eine solche Absenkung des Systemdrucks der Kuppiungs-Betätigungsflüssigkeit und/oder die genannte Verstellung des Zündwinkels stattfindet. In diesem Falle wird zusätzlich zu den bekannten Maßnahmen gemäß der Erfindung eine vom Fahrer am Fahrelement 16 eingestellte schnelle Drehmomentzunahme des Motors 12 am Motor 12 in der vorstehend beschriebenen Weise erst kurzzeitig verzögert oder mit reduziertem oder begrenztem Gradienten der Drehmomentzunahme ausgeführt.

In Fig. 1 sind eine Brennstoff-Einspritzvorrichtung 24 des Verbrennungsmotors 12 alternativ zur Drosselklappe 22, eine Schaltkupplung 26, ein Zahnrad 28 sowie eine Anordnung von mehreren Ventilen 30 des Automatikgetriebes 6 je schematisch dargestellt. Die Ventile der Ventilanordnung 30 werden von der elektronischen Getiebesteuereinrichtung 8 betätigt zur Zufuhr von Druckflüssigkeit (oder Druckluft) zur Betätigung der Schaltkupplungen 26 (und gegebenenfalls vorhandenen Schaltbremsen) des Automatikgetriebes 6 in Abhängigkeit von dem einzuschaltenden Getriebegang.

## Patentansprüche

1. Verfahren zum Schalten eines Automatikgetriebes (6) in einem Kraftfahrzeug, das einen Verbrennungsmotor (12) mit einer elektronischen Motorsteuereinrichtung (14) enthält; welche mit einem Fahrelement (16) elektrisch gekoppelt ist und in Abhängigkeit von dessen Einstellungen durch einen Fahrer die Leistung des Motors (12) einstellt, insbesondere die Brennstoffzufuhr zu ihm, wobei das Automatikgetriebe (6) eine elektronische Getriebesteuereinrichtung (8) zum automatischen Schalten von Getriebegängen aufweist, wobei die elektronische Getriebesteuereinrichtung (8) mit der elektronischen Motorsteuereinrichtung (14) elektrisch gekoppelt (20) ist und beide Einrichtungen derart ausgebildet sind, daß eine Veränderung der Einstellung des Fahrelements (16) in Richtung auf eine höhere Leistung des Motors (12) jeweils dann erst nach einer zeitlichen Verzögerung und/oder mit einer Reduzierung des Gradienten oder einer Begrenzung des Gradienten der Leistungszunahme von der Motorsteuereinrichtung (14) an dem Motor (12) ausgeführt wird, wenn während einer solchen Einstellungs-Veränderung des Fahrelements (16) im Automatikgetriebe (6) gerade ein Gangschaltvorgang abläuft und sich dabei das Automatikgetriebe (6) in einer kritischen Schaltphase befindet, in welcher bei einer sofortigen, der Einstellungs-Veränderung des Fahrelements (16) entsprechenden Leistungserhöhung des Motors (12) die Gefahr besteht, daß ein unerwünschter Schlupfbetriebszustand oder eine unerwünschte stoßartige Beendigung eines Schlupfbetriebes im Automatikgetriebe (6) entsteht, **dadurch gekennzeichnet, dass** diese Veränderung der Einstellung des Fahrelements (16) nach einer zeitlichen Verzögerung und/oder mit einer Reduzierung des Gradienten oder einer Begrenzung des Gradienten der Leistungszunahme von der Motorsteuereinrichtung (14) an dem Motor ausgeführt wird, wenn die Geschwindigkeit der Einstellungsveränderung und die Größe der gewünschten neuen Leistung zusammen einen vorbestimmten Wert übersteigen.

2. Verfahren nach Anspruch 1,
**dadurch gekennzeichnet,**
**daß** die Verzögerung auf 100 bis 400 ms begrenzt ist.

3. Verfahren nach Anspruch 1,
**dadurch gekennzeichnet,**
**daß** die Verzögerung auf 200 bis 300 ms begrenzt ist.

4. Verfahren nach einem der Ansprüche 1 bis 3, wobei der Verbrennungsmotor (12) ein Ottomotor mit einer Drosselklappe (22) zur Regulierung seiner Brennstoff-Luft-Zufuhr ist,
**dadurch gekennzeichnet,**
**daß** die Drosselklappe (22) von der Motorsteuereinrichtung (14) in Abhängigkeit von Einstellungs-Veränderungen des Fahrelements (16) in der genannten Weise mit zeitlicher Verzögerung und/oder mit reduziertem oder begrenztem Gradienten seiner Einstellgeschwindigkeit eingestellt wird.

5. Verfahren nach einem der Ansprüche 1 bis 3,
**dadurch gekennzeichnet,**
**daß** dem Verbrennungsmotor (12) sein Brennstoff eingespritzt wird und daß die elektronische Motorsteuereinrichtung (12) die Brennstoff-Einspritzung in Abhängigkeit von Einstellungs-Veränderungen des Fahrelements (16), wenn diese in Richtung auf eine höhere Motorleistung ausgeführt werden, in der genannten Weise mit zeitlicher Verzögerung erhöht und/oder mit reduziertem oder mit begrenztem Geschwindigkeitsgradienten erhöht wird.

6. Kraftfahrzeug mit einem Automatikgetriebe (6), einem Verbrennungsmotor (12), einer elektronischen Motorsteuereinrichtung (14), welche mit einem Fahrelement (16) elektrisch gekoppelt ist und in Abhängigkeit von dessen Einstellungen durch einen Fahrer die Leistung des Motors (12) einstellt, insbesondere die Brennstoffzufuhr zu ihm, wobei das Automatikgetriebe (6) eine elektronische Getriebesteuereinrichtung (8) zum automatischen Schalten von Getriebegängen aufweist, wobei die elektronische Getriebesteuereinrichtung (8) mit der elektronischen Motorsteuereinrichtung (14) elektrisch gekoppelt (20) ist und beide Einrichtungen derart ausgebildet sind, daß eine Veränderung der Einstellung des Fahrelements (16) in Richtung auf eine höhere Leistung des Motors (12) jeweils dann erst nach einer zeitlichen Verzögerung und/oder mit einer Reduzierung des Gradienten oder einer Begrenzung des Gradienten der Leistungszunahme von der Motorsteuereinrichtung (14) an dem Motor (12) ausgeführt wird, wenn während einer solchen Einstellungs-Veränderung des Fahrelements (16) im Automatikgetriebe (6) gerade ein Gangschaltvorgang abläuft und sich dabei das Automatikgetriebe (6) in einer kritischen Schaltphase befindet, in welcher bei einer sofortigen, der Einstellungs-Veränderung des Fahrelements (16) entsprechenden Leistungserhöhung des Motors (12) die Gefahr besteht, daß ein unerwünschter Schlupfbetriebszustand oder eine unerwünschte stoßartige Beendigung eines Schlupfbetriebes im Automatikgetriebe (6) entsteht, **dadurch gekennzeichnet, dass** diese Veränderung der Einstellung des Fahrelements (16) nach einer zeitlichen Verzögerung und/oder mit einer Reduzierung des Gradienten oder einer Begrenzung des Gradienten der Leistungszunahme von der Motorsteuereinrichtung (14) an dem Motor ausgeführt wird, wenn die Geschwindigkeit der Einstellungsveränderung und die Größe der gewünschten neuen Leistung zusammen einen vorbestimmten Wert übersteigen.

## Claims

1. A method for shifting gears in an automatic gearbox (6) in a motor vehicle, which has an internal combustion engine (12) with an electronic engine control device (14), which is electrically coupled to a driving element (16) and depending on its setting by a driver adjusts the power of the engine (12), especially the fuel feed to it, in which the automatic gearbox (6) has an electronic gearbox control device (8) for the automatic shifting of gears, whereby the electronic gearbox control device (8) is electrically coupled (20) to the electronic engine control device (14) and both devices are configured such that a change in the setting of the driving element (16) in the direction of a higher power of the engine (12) will only be performed by the engine control device (14) on the engine (12) after a time delay and/or a reduction of the gradient or a limiting of the gradient of power increase, if during such a change in the setting of the driving element (16) a gear change process is actually under way and the automatic gearbox (6) is thereby in a critical gear shifting phase, in which the danger exists with an immediate increase of power of the engine (12) corresponding to the change in setting of the driving element (16) that an undesirable slip operating condition or an undesirable abrupt ending of a slip operation arises, **characterised in that** this change of the setting of the driving element (16) is performed on the engine by the engine control device (14)after a time delay and/or with a reduction of the gradient or a limiting of the gradient of the power increase, if the speed of the change of setting and the size of the desired new power together exceed a predetermined value.

2. A method according to Claim 1, **characterised in that** the delay is limited to 100 to 400 ms.

3. A method according to Claim 1, **characterised in that** the delay is limited to 200 to 300 ms.

4. A method according to one of the Claims 1 to 3, in which the internal combustion engine (12) is a petrol engine with a throttle flap (22) to regulate its fuel-air feed, **characterised in that** the throttle flap (22) is adjusted by the engine control device depending on adjustment changes of the driving element (16) in the manner stated with a time delay or limited gradient of its speed of adjustment.

5. A method according to one of the Claims 1 to 3 **characterised in that** the internal combustion engine (12) is injected with its fuel and that the electronic engine control device (12) increases the fuel injection depending on the changes in adjustment of the driving element (16), if they are performed in the direction of a higher engine power, in the manner stated with a time delay and/or increases it with a reduced or limited gradient of its speed of adjustment.

6. A motor vehicle with an automatic gearbox (6), an internal combustion engine (12), an electronic engine control device (14), which is electrically coupled to a driving element (16) and depending on its settings by the driver adjusts the power of the engine (12), especially the fuel feed to it, whereby the automatic gearbox (6) has an electronic gearbox control device (8) for the automatic shifting of gears, in which the electronic gearbox control device (8) is electrically coupled (20) to the electronic engine control device (14) and both devices are configured such that a change in the setting of the driving element (16) in the direction of a higher power of the motor (12) is only performed on the engine (12) by the engine control device (14) following a time delay and/or with a reduction of the gradient or a limiting of the gradient of the power increase, if during such a change of setting of the driving element (16) a gear changing process is actually taking place in the automatic gearbox (6) in a critical gear shifting phase, in which the danger exists with an immediate increase of power of the engine (12) corresponding to a change in the setting of the driving element (16) that an undesirable slip operating condition or an undesirable abrupt ending of a slip operation arises, **characterised in that** this change of adjustment of the driving element (16) is performed on the engine by the engine control device (14)after a time delay and/or with a reduction of the gradient or a limiting of the gradient of the power increase, if the speed of the change of setting and the size of the desired new power together exceed a predetermined value.

## Revendications

1. Procédé de commutation d'une boîte de vitesses automatique (6) d'un véhicule automobile équipé d'un moteur à combustion interne (12) à commande électronique (14) de moteur, couplée électriquement à un élément de conduite (16) et qui en fonction des réglages de cet élément par le conducteur, règle la puissance à fournir par le moteur (12), notamment l'alimentation en carburant du moteur,
la boîte de vitesses automatique (6) ayant une installation de commande électronique (8) de boîte de vitesses pour commuter automatiquement les rapports de vitesses, cette installation électronique de commande de boîte de vitesses (8) étant couplée électriquement à la commande électronique de moteur (14), et les deux installations étant réalisées pour qu'une modification du réglage de l'élément de conduite (16) dans le sens d'une puissance plus grande du moteur (12) n'est par la commande de moteur (14) exécutée qu'après une temporisation et/ou avec une réduction du gradient ou une limitation du gradient de l'augmentation de puissance du moteur (12), si pendant une telle modification de réglage de l'élément de conduite (16), la boîte de vitesses automatique (6) effectue juste un changement de rapport de vitesses et si la boîte de vitesses automatique (6) se trouve dans une phase de commutation critique, dans laquelle une augmentation immédiate de la puissance à fournir par le moteur (12) et correspondant au changement de réglage de l'élément de conduite (16), risque un état de patinage gênant ou même la fin du mode de patinage dans la boîte de vitesses automatique (6) avec un choc gênant,
**caractérisé en ce que**
cette variation de réglage de l'élément de conduite (16) est exécutée après une temporisation et/ou avec une réduction du gradient ou une limitation du gradient de l'augmentation de puissance par l'installation de commande (14) du moteur, si la vitesse de la variation de réglage et l'intensité de la nouvelle puissance souhaitée dépassent toutes deux une valeur prédéterminée.

2. Procédé selon la revendication 1,
**caractérisé en ce que**
la temporisation est limitée à 100-400 ms.

3. Procédé selon la revendication 1,
**caractérisé en ce que**
la temporisation est limitée à 200-300 ms.

4. Procédé selon l'une quelconque des revendications 1 à 3,
dans lequel le moteur à combustion interne (12) est un moteur à essence avec un papillon d'étranglement (22) pour réguler son alimentation air/carburant,
**caractérisé en ce que**
le volet d'étranglement (22) est réglé par la commande de moteur (14) en fonction des variations de réglage de l'élément de conduite (16), de la façon indiquée, avec une temporisation et/ou un gradient réduit ou limité de sa vitesse de réglage.

5. Procédé selon l'une quelconque des revendications 1 à 3,
**caractérisé en ce que**
le carburant est injecté dans le moteur à combustion (12) de sorte que la commande électronique (14) du moteur augmente l'injection en fonction des variations de réglage de l'élément de conduite (16) si ceci s'effectue dans le sens d'une augmentation de puissance du moteur, de la façon indiquée avec une temporisation et/ou avec un gradient de vitesse réduit ou limité.

6. Véhicule automobile équipé d'une boîte de vitesses automatique (6), d'un moteur à combustion interne (12), d'une commande électronique de moteur (14) couplée à un élément de conduite (16) et qui, en fonction des réglages par le conducteur, règle la puissance du moteur (12) notamment l'alimentation en carburant du moteur, la boîte de vitesses automatique (6) comportant une installation de commande électronique de boîte de vitesses (8) pour commuter automatiquement les rapports de vitesses, la commande électronique (8) de la boîte de vitesses étant couplée électriquement (20) à la commande électronique (14) du moteur, et les deux installations étant réalisées pour qu'une variation du réglage de l'élément de conduite (16) dans le sens d'une puissance plus élevée du moteur (12) n'est appliquée chaque fois par la commande de moteur (14) sur le moteur (12), qu'après une première temporisation et/ou avec une réduction du gradient ou une limitation du gradient de l'augmentation de puissance si pendant une telle variation de réglage de l'élément de conduite (16) dans la boîte de vitesses automatique (6), se déroule précisément une commutation de rapport et si la boîte de vitesses automatique (6) se trouve dans une phase de commutation critique
dans laquelle une augmentation immédiate de la puissance du moteur (12) correspondant au changement de réglage de l'élément de conduite (16) créerait le risque d'un état de patinage gênant ou d'une fin avec choc, gênant, du mode de patinage dans la boîte de vitesses automatique (6),
véhicule **caractérisé en ce que**
cette variation du réglage de l'élément de conduite (16) est exécutée par l'installation de commande (14) sur le moteur, si seulement après une temporisation et/ou une réduction du gradient ou une limitation du gradient de l'augmentation de puissance, si la vitesse de la variation de réglage et l'amplitude de la nouvelle puissance souhaitée dépassent toutes deux une valeur prédéterminée.
